# EUROPEAN PATENT APPLICATION

(11) **EP 4 144 263 A1**
(43) Date of publication of application: **08.03.2023**
(21) Application number: 21194689.2
(22) Date of filing: 03.09.2021
(51) Int. Cl.: A47J 27/21, A47J 43/07, A47J 27/56, G05D 23/19

(54) **CONTROL UNIT AND METHOD FOR PROVIDING OVERFLOW PROTECTION**

(71) Applicant: BSH Hausgeräte GmbH, 81739 München (DE)
(72) Inventor: Mrak, Peter, 2382 Mislinja (SI); Irsic, Tomo, 3214 Zrece (SI)

(57) **Abstract**

A control unit (101) for an appliance (100) is described, wherein the appliance (100) comprises a receptacle (104) configured to take up content that is heated up within the receptacle (104). The control unit (101) is configured to determine that a target temperature (206) for the receptacle (104) and/or for the content within the receptacle (104) is not reached and/or reachable. Furthermore, the control unit (101) is configured, in reaction to this, to perform a safety measure which is directed to preventing the occurrence of over-boiling and/or spill-over of the content within the receptacle (104).

## Description

The present document relates to a kitchen appliance. In particular, the present document relates to protecting a kitchen appliance from over-boiling and/or overflow during heat-up.

A kitchen appliance may be used to heat up ingredients within a receptacle, in particular a bowl, of the kitchen appliance. During the heat-up process an over-boiling and/or overflow situation may occur, causing ingredients to flow out of the receptacle and/or to be spoiled.

The present document addresses the technical problem of providing an efficient and reliable over-boiling and/or overflow protection during heat-up of a kitchen appliance. The technical problem is solved by each of the independent claims. Preferred examples are described in the dependent claims.

According to an aspect, a control unit for an appliance, in particular a kitchen and/or cooking appliance, is described. The appliance comprises a receptacle (in particular a bowl) configured to take up content (e.g., a food item) that is heated up within the receptacle (using a heating unit of the appliance). Furthermore, the appliance may comprise a motor configured to drive a tool which is located within the receptacle and which is attached to the motor. Example tools are a knife, a shredder, a hook, a foaming tool, etc. The motor may be integrated within a base unit of the appliance, wherein the base unit may be configured to be placed on a worktop of a kitchen.

The control unit is configured to determine that a target temperature for the receptacle and/or for the content within the receptacle is not reached and/or is not reachable (e.g., within a pre-determined time interval).

The control unit may be configured to determine the target temperature based on a user input of a user of the appliance via a user interface of the appliance. Alternatively, or in addition, the control unit may be configured to process the content within the receptacle based on recipe data indicative of a recipe to be prepared using the appliance. In this case, the target temperature may be determined based on the recipe data.

Furthermore, the control unit is configured, in reaction to determining that the target temperature is not reached and/or is not reachable, to perform a safety measure which is directed to preventing the occurrence of over-boiling and/or spill-over of the content within the receptacle.

The control unit may be configured, as a safety measure, to cause the heating unit of the appliance to automatically reduce the amount of thermal energy and/or the thermal power, which is provided to the receptacle for heating up the content of the receptacle. In particular, the heating unit may be stopped. Alternatively, or in addition, the control unit may be configured, as a safety measure, to cause the motor of the appliance to adapt the rotation speed of the tool for processing the content within the receptacle.

Hence, a control unit for an appliance is described, which is configured to detect and to prevent an over-boiling and/or spill-over situation in an efficient and reliable manner (based on the fact that the target temperature is not reached or reachable).

The control unit may be configured to determine based on measurement data of a temperature sensor of the appliance that the target temperature for the receptacle and/or for the content within the receptacle is not reached and/or reachable. The temperature sensor may comprise an infrared sensor and/or a resistor-based sensor.

In particular, the control unit may be configured to determine, based on the measurement data of the temperature sensor, a temperature signal. The temperature signal may indicate the (estimated and/or measured) temperature of the receptacle and/or of the content of the receptacle as a function of time. For determining the temperature signal, a temperature model which is configured to convert the measurement data provided by the temperature sensor of the appliance into a temperature value indicative of the temperature of the receptacle and/or of the content of the receptacle may be used.

It may then be determined in a particularly reliable manner based on the temperature signal that the target temperature for the receptacle and/or for the content within the receptacle is not reached and/or reachable.

In particular, the control unit may be configured to detect, based on the temperature signal, that the temperature of the receptacle and/or of the content of the receptacle saturates at a maximum value which is lower than the target temperature, in particular lower by a certain temperature gap. Alternatively, or in addition, the control unit may be configured to determine a gradient of the temperature signal, and it may be detected (at a detection time instant) that the gradient, in particular an absolute value of the gradient, falls below a pre-determined saturation gradient.

Based on one or more of these indicators, it may be determined in a particularly reliable manner (e.g., at the detection time instant) that the target temperature for the receptacle and/or for the content within the receptacle is not reached and/or reachable.

Hance, the control unit may be configured to use the above-mentioned temperature model for determining that the target temperature for the receptacle and/or for the content within the receptacle is not reached and/or reachable, thereby increasing the reliability for detecting an over-boiling and/or spill-over situation.

According to another aspect, an appliance is described. The appliance comprises a receptacle configured to take up content that is to be heated up within the receptacle. Furthermore, the appliance comprises a control unit as described in the present document.

According to a further aspect, a method for preventing the occurrence of over-boiling and/or spill-over of content during heat-up within a receptacle of an appliance is described. The method comprises determining that a target temperature for the receptacle and/or for the content within the receptacle is not reached and/or is not reachable. Furthermore, the method comprises, in reaction to this, performing a safety measure which is directed to preventing the occurrence of over-boiling and/or spill-over of the content within the receptacle.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figure 1a shows a block diagram of a kitchen appliance, in particular of a cooking processor;
Figure 1b shows a perspective view of a kitchen appliance;
Figure 2 shows a temperature signal during a heat-up process of a kitchen appliance; and
Figure 3 shows a flow chart of an example method for providing over-boiling and/or overflow protection during a heat-up process of a kitchen appliance.

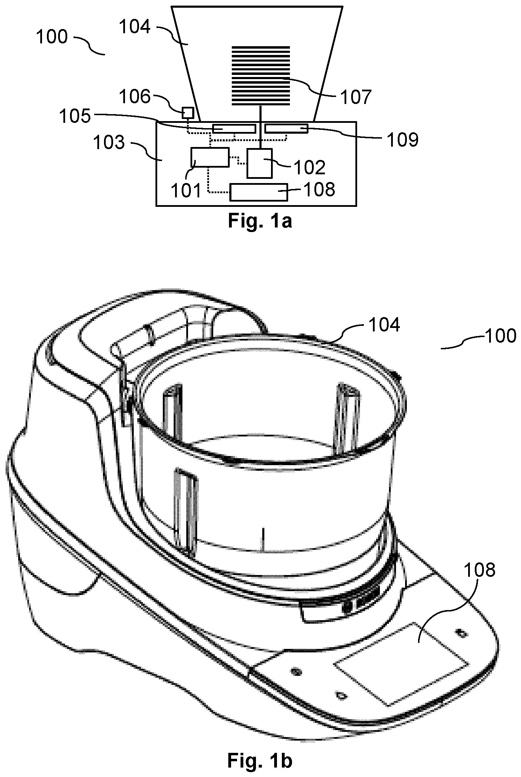

As outlined above, the present document is directed to preventing an over-boiling and/or overflow situation of a kitchen appliance in an efficient and reliable manner. In this context, Fig. 1a shows a block diagram of an example appliance 100 which comprises a base unit 103 onto which a receptacle 104, in particular a bowl, is placed. The receptacle 104 may be configured to be covered by a lid. The base unit 103 comprises a motor 102 which is configured to drive a tool 107 which is located within the receptable 104. The tool 107 may be detachable and/or exchangeable. In particular, the appliance 100 may be configured to be used with an arbitrary tool 107 out of a pre-determined set of K different tools 107.

The appliance 100 may comprise a heating unit 106 (which may alternatively, or in addition, be integrated into the receptacle 104) for heating the receptacle 104, e.g., for allowing a food item to be cooked within the receptacle 104. Furthermore, the appliance 100 may comprise a weighing unit 105 which is configured to measure the weight of the one or more food items which are placed within the receptacle 104. In addition, the appliance 100 may comprise a user interface 108 which allows a user to interact with the appliance 100, e.g., for activating or for deactivating the motor 102 and/or for setting a target temperature for operating the heating unit 106. In addition, the appliance 100 may be connected to the internet, to another appliance and/or to a (smart) device via a (wireless) communication interface such as WLAN. A control unit 101 of the appliance 100 may be configured to operate the appliance 100, in particular the motor 102 and/or the heating unit 106, in dependence of a user input received via the user interface 108 (of the appliance 100 or of a remote device).

Furthermore, the appliance 100 comprises a temperature sensor 109 which is configured to provide measurement data regarding the temperature of the receptacle 104 and/or of the content within the receptacle 104. The temperature sensor 109 may comprise an infrared (IR) based sensor and/or a resistor-based sensor.

Fig. 1b shows a perspective view of an exemplary appliance 100.

During operation of the appliance 100, an overboiling situation may occur, when heating up one or more different ingredients within the receptacle 104 during a cooking process. By way of example, if milk is heated up within the receptacle 104, the milk may start to boil and may spill over the edge of the receptacle 104. As a result of this, the appliance 100 and the surrounding area of the appliance 100 may get soiled. Furthermore, the ingredient within the receptacle 104 may get spoiled.

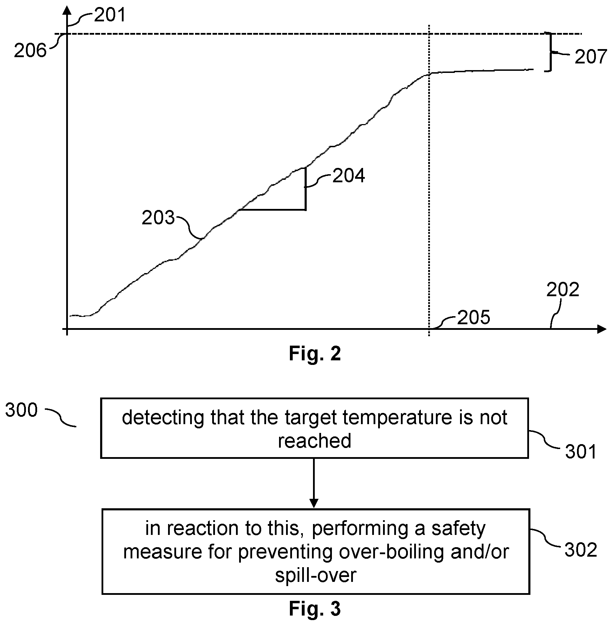

Fig. 2 shows an example temperature signal 203 during a heat-up process of one or more ingredients within the receptacle 104 of the appliance 100. The temperature signal 203 indicates the temperature 201 as a function of time 202. The temperature 201 may be determined based on the measurement data provided by the temperature sensor 109 (e.g., using a pre-determined temperature model). The control unit 101 may be configured to estimate the temperature 201 of the content of the receptacle 104 based on the measurement data provided by the temperature sensor 109 (e.g., using a pre-determined temperature model).

The temperature 201 increases as the receptacle 104 is heated using the heating unit 106. In particular, the temperature 201 may increase with a certain temperature gradient 204, wherein the temperature gradient 204 indicates the number of degrees by which the temperature 201 increases within a given time interval.

Fig. 2 indicates the target temperature 206 for the content of the receptacle 104, which may have been set by the user of the appliance 100 via the user interface 108 and/or which may have been set automatically based on recipe data for a recipe that is being prepared using the appliance 100. As can be seen from Fig. 2, the temperature signal 203 does not reach the target temperature 206. In particular, temperature signal 203 saturates at a certain temperature gap 207 below the target temperature 206. Furthermore, the gradient 204 of the temperature signal 203 falls to substantially zero at a certain time instant 205.

The control unit 101 may be configured to detect that the (measured and/or estimated) temperature 201 of the content of the receptacle 104 does not and/or cannot reach the target temperature 206. In particular, it may be determined that a temperature gap 207 remains between the measured and/or estimated temperature 201 and the target temperature 206. This information may be taken as an indicator for the occurrence of an overboiling situation. In particular, it may be determined based on the detected temperature gap 207 that an overboiling situation is present within the receptacle 104.

In reaction to determining that an overboiling situation has occurred, a safety measure may be performed, which is directed to stopping the overboiling situation and/or at preventing content from the receptacle 104 to spill over the edge of the receptacle 104.

Hence, the control unit 101 of the appliance 100 may be configured to determine a target temperature 206, e.g., a target temperature 206 which has been set by the user of the appliance 100. The one or more ingredients within the receptacle 104 may have at least partially different boiling points, wherein the boiling point of at least one of the ingredients may be below the target temperature 206. By way of example, one of the ingredients may be milk with a boiling temperature of 95°C, whereas the target temperature 206 may be set of 100°C.

The control unit 101 may be configured to observe the temperature 201 of the content of the receptacle 104 (during the heat-up process). Furthermore, the control unit 100 may be configured to detect that the temperature 201 of the content of the receptacle 104 is not reached (during the heat-up process). In reaction to this, the heating unit 106 may be controlled to stop the heat-up process and/or to reduce the amount of thermal energy which is provided to the receptacle 104. As a result of this, an overboiling situation and/or a spill-over of the receptacle 104 may be prevented in an efficient and reliable manner.

The control unit 101 does not need to know the actual boiling point of the one or more ingredients of the receptacle 104. The control unit 101 may only need to analyze whether or not the (measured and/or estimated) temperature 201 reaches the target temperature 206. This logic may be applied for all kinds of ingredients, target temperatures 206 and/or boiling temperatures.

As illustrated in Fig. 2, the temperature 201 of the content of the receptacle 104 remains substantially constant, when the boiling point of the content occurs. This information, in particular the gradient 204 of the temperature signal 203, may be used for detecting that the temperature 201 does not and/or will not reach the target temperature 206 (within a pre-determined time interval). In reaction to this, the heating unit 106 of the appliance 100 may be stopped. Alternatively, the power of the heating unit 106 may be reduced by a certain percentage. As a result of this, the over-boiling area is not reached and thus spill-over of ingredients does not occur or is at least reduced.

Fig. 3 shows a flow chart of an example (computer-implemented) method 300 for preventing the occurrence of over-boiling and/or spill-over of content during heat-up within a receptacle 104 of a (kitchen and/or cooking) appliance 100. The method 300 may be executed by a control unit 101 of the appliance 100.

The method 300 comprises determining 301 that a target temperature 206 for the receptacle 104 and/or for the content within the receptacle 104 is not reached and/or is not reachable (within a pre-determined time interval). In particular, it may be determined that the target temperature 206 cannot and/or will not be reached (e.g., due to an observed saturation of the (measured and/or estimated) temperature 201). The target temperature 206 may have been set by a user of the appliance 100.

Furthermore, the method 300 comprises, in reaction to determining that the target temperature 206 is not reached, performing 302 a safety measure which is directed to preventing the occurrence of over-boiling and/or spill-over of the content within the receptacle 104. In particular, operation of the heating unit 106 may be stopped or the heating power of the heating unit 106 may be reduced.

In the present document a scheme is described, which allows over-boiling and/or spill-over situations to be prevented in an efficient and reliable manner (without the need of additional sensors or components of the appliance 100).

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A control unit (101) for an appliance (100); wherein the appliance (100) comprises a receptacle (104) configured to take up content that is heated up within the receptacle (104); wherein the control unit (101) is configured to
- determine that a target temperature (206) for the receptacle (104) and/or for the content within the receptacle (104) is not reached and/or reachable; and
- in reaction to this, performs a safety measure which is directed to preventing the occurrence of over-boiling and/or spill-over of the content within the receptacle (104).

2. The control unit (100) of claim 1, wherein
- the control unit (101) is configured to determine based on measurement data of a temperature sensor (109) of the appliance (100) that the target temperature (206) for the receptacle (104) and/or for the content within the receptacle (104) is not reached and/or reachable; and
- in particular the temperature sensor (109) comprises an infrared sensor and/or a resistor-based sensor.

3. The control unit (100) of claim 2, wherein the control unit (101) is configured to
- determine, based on the measurement data of the temperature sensor (109), a temperature signal (203); wherein the temperature signal (203) indicates a temperature (201) of the receptacle (104) and/or of the content of the receptacle (104) as a function of time (202); and
- determine, based on the temperature signal (203), that the target temperature (206) for the receptacle (104) and/or for the content within the receptacle (104) is not reached and/or reachable.

4. The control unit (100) of claim 3, wherein the control unit (101) is configured to
- detect, based on the temperature signal (203), that the temperature (201) of the receptacle (104) and/or of the content of the receptacle (104) saturates at a maximum value which is lower than the target temperature (206), in particular lower by a temperature gap (207); and
- based on this, determine that the target temperature (206) for the receptacle (104) and/or for the content within the receptacle (104) is not reached and/or reachable.

5. The control unit (100) of any of claims 3 to 4, wherein the control unit (101) is configured to
- determine a gradient (204) of the temperature signal (203);
- detect that the gradient (204), in particular an absolute value of the gradient (204), falls below a pre-determined saturation gradient; and
- based on this, determine that the target temperature (206) for the receptacle (104) and/or for the content within the receptacle (104) is not reached and/or reachable.

6. The control unit (100) of any previous claim, wherein the control unit (101) is configured to
- determine a temperature model which is configured to convert measurement data provided by a temperature sensor (109) of the appliance (100) into a temperature value indicative of a temperature (201) of the receptacle (104) and/or of the content of the receptacle (104); and
- use the temperature model for determining that the target temperature (206) for the receptacle (104) and/or for the content within the receptacle (104) is not reached and/or reachable.

7. The control unit (100) of any previous claim, wherein the control unit (101) is configured to determine the target temperature (206) based on a user input of a user of the appliance (100) via a user interface (108) of the appliance (100).

8. The control unit (100) of any previous claim, wherein the control unit (101) is configured to
- process the content within the receptacle (104) based on recipe data indicative of a recipe to be prepared using the appliance (100); and
- determine the target temperature (206) based on the recipe data.

9. The control unit (100) of any previous claim, wherein the control unit (101) is configured, as a safety measure, to cause a heating unit (106) of the appliance (100) to automatically reduce an amount of thermal energy which is provided to the receptacle (104) for heating up the content of the receptacle (104).

10. The control unit (100) of any previous claim, wherein the control unit (101) is configured, as a safety measure, to cause a motor (102) of the appliance (100) to adapt a rotation speed of a tool (107) for processing the content within the receptacle (104).

11. An appliance (100), wherein
- the appliance (100) comprises a receptacle (104) configured to take up content that is to be heated up within the receptacle (104); and
- a control unit (101) according to any previous claim.

12. A method (300) for preventing the occurrence of over-boiling and/or spill-over of content during heat-up within a receptacle (104) of an appliance (100); wherein the method (300) comprises,
- determining (301) that a target temperature (206) for the receptacle (104) and/or for the content within the receptacle (104) is not reached and/or reachable; and
- in reaction to this, performing (302) a safety measure which is directed to preventing the occurrence of over-boiling and/or spill-over of the content within the receptacle (104).
